# EUROPÄISCHE PATENTANMELDUNG

(11) **EP 1 026 492 A2**
(43) Veröffentlichungstag der Anmeldung: **09.08.2000**
(21) Anmeldenummer: 00810071.1
(22) Anmeldetag: 26.01.2000
(51) Int. Cl.: G01L 11/00

(54) **Drahtlose Drehmoment-Messeinrichtung und Sensor für dieselbe**

(30) Priorität: 01.02.1999 CH 18299
(71) Anmelder: BAUMER ELECTRIC AG, 8500 Frauenfeld (CH)
(72) Erfinder: Peter, Reto, 8006 Zürich (CH); Buff, Werner, 98693 Ilmenau (DE); Ehrenfordt, Jochen, 98693 Ilmenau (DE)
(74) Vertreter: Frei, Alexandra Sarah

(57) **Zusammenfassung**

Die drahtlose Drehmoment-Messeinrichtung zur Messung eines an einer Welle (1) angreifenden Drehmomentes enthält einen Sensor (20) und eine elektronische Abfrageeinheit (30). Der Sensor (20) enthält einen elektrischen Schwingkreis mit mindestens einer Resonanzfrequenz. Der Schwingkreis beinhaltet eine Anpassschaltung mit einem Kondensator (5, 6), ein Oberflächenwellenbauelement und eine Antenne (8). Die erste Elektrode (6) des Kondensators ist bspw. starr mit der Welle verbunden. Die zweite Elektrode (5) ist derart an einer Hülse (2) befestigt, dass sie gegenüber der ersten Elektrode (6) verschiebbar ist. So bewirkt eine Verwindung der Welle (1) durch das Drehmoment eine Änderung der Resonanzfrequenz des Schwingkreises. Von der Abfrageeinheit (30) wird ein hochfrequentes Abfragesignal (9) zur Antenne (8) übertragen. Dieses regt den Schwingkreis zu einer hochfrequenten Schwingung an, die als Antwortsignal (10) zur Abfrageeinheit (30) zurückgesendet wird. Der Sensor (20) ist empfindlich, braucht keine Energiequelle und ist keinen mechanischen Spannungen ausgesetzt.

## Beschreibung

Die vorliegende Erfindung betrifft eine drahtlose Drehmoment-Messeinrichtung, ein Verfahren zu deren Betrieb und einen Sensor für dieselbe, gemäss den Oberbegriffen der unabhängigen Patentansprüche.

Drehmomentsensoren werden in vielen Gebieten der Industrie benötigt. Sie dienen der Erfassung des tatsächlichen Belastungszustandes von mechanischen Teilen und rotierenden Wellen und ermöglichen so eine optimale Steuerung der antreibenden Leistung.

Im Stand der Technik sind verschiedene Anordnungen zur Erfassung von Drehmomenten bekannt. Dabei werden Drehmomente entweder an fest stehenden oder sich nur wenig bewegenden Teilen bestimmt. Als elektrische Verbindung von Messeinrichtung und Auswertegerät bei rotierenden Achsen werden Schleifringe mit Schleifbürsten, induktive Koppler oder Hochfrequenzübertragungssysteme benutzt. Die gebräuchlichsten Sensoren für die mechanische Verspannung sind Dehnmessstreifen oder Oberflächenwellenbauelemente welche direkt auf einer der Torsion ausgesetzten Welle starr befestigt sind. Dabei ist nachteilig, dass an rotierenden Achsen elektrische Kontakte über Schleifringe nur unzuverlässig arbeiten und starr auf Wellen befestigte Dehnmessstreifen oder Oberflächenwellenbauelemente einer erhöhten mechanischen Belastung ausgesetzt sind, was zu einer verringerten Lebensdauer und Langzeitstabilität führt. Sie sind in ihrer Empfindlichkeit relativ gering, da die Einwirkung der Torsion nur in den geringen Abmessungen des Dehnmessstreifens oder des Oberflächenwellenbauelementes erfolgt. Weitere aber weniger angewendete Methoden nutzen zum Beispiel den Effekt der Magnetostriktion, in welchem ferromagnetische Stoffe ihre Permeabilität auf Grund der mechanischen Belastung ändern, das Tauchanker-Prinzip in welchem mehrere Tauchanker je nach angelegtem Drehmoment verschieden weit in entsprechend angeordneten Spulen hineinragen, sowie induktive Transformatorsysteme in welchem die Kopplung eines Oszillators an der Primär- zur Sekundärspule über geeignete mechanische Strukturen verändert wird.

Für bekannte Drehmoment-Messeinrichtungen werden hauptsächlich zwei wesentliche Arbeitsprinzipien verwendet. Dabei geht es einmal darum, dass die durch ein Drehmoment an einer Welle entstehende Torsion in die Änderung eines elektrischen und/oder magnetischen Feldes umgewandelt wird und diese Änderung elektrisch über Schleifringe oder durch induktive Kopplung nach außen geführt wird. Das zweite Prinzip beruht auf piezoelektrischen Elementen wie akustische Oberflächenwellenbauelemente oder Dehnmessstreifen, die durch die Einleitung der durch ein Drehmoment entstehenden mechanischen Spannungen ihre Eigenschaften derart verändern, dass die Änderung über Schleifringe oder per Funk an eine Auswerteeinheit übertragen werden kann.

In DE-39 18 862 A1 wird eine Drehmoment-Messeinrichtung beschrieben, die zur Ermittlung von Drehmomenten an nicht rotierenden Teilen geeignet ist und darauf beruht, dass eine Welle der Drehmoment-Messeinrichtung einen Abschnitt mit vermindertem Durchmesser aufweist. An zwei verschiedenen Stellen der Welle sind Hülsen angebracht, die bei Verwindung der Welle ein axiale Bewegung erzeugen. Dadurch wird ein elektrisches/und oder magnetisches Feld verändert, was zur Erzeugung des Sensorsignals genutzt wird. Diese Anordnung ist nicht geeignet, Drehmomente an rotierenden Wellen zu messen.

In DE-37 14 150 A1 wird eine Vorrichtung zum Messen der lastabhängigen Torsion einer rotierenden Welle beschrieben, bei der eine mit der Welle rotierende Sensoranordnung zur Erzeugung eines elektrischen Messsignals, das die momentane Torsion wiedergibt, über Schleifringe und Schleifbürsten mit einer zur Auswertung benutzten Elektronikeinheit verbunden ist. Die Vorrichtung wird hauptsächlich über einen Winkelkopf am Ende einer Welle benutzt und ist über elektrische Leitungen mit der elektronischen Auswerteeinheit verbunden. Die Signalübertragung über Schleifring und Schleifbürste hat Nachteile hinsichtlich der Zuverlässigkeit der Messwerte insbesondere bei rauher Umgebung.

In US-Patent Nr. 5,585,571 ist eine Methode und eine Anordnung zur Messung der dynamischen Torsion an einer rotierenden Achse beschrieben, bei der ein oder zwei mit akustischen Oberflächenwellen arbeitende Resonator(en fest mit der rotierenden Achse verbunden sind, wobei die Veränderung der Resonatorfrequenz(en infolge Torsion ausgenutzt wird. Die Verbindung zur elektronischen Auswerteeinheit erfolgt über Schleifringe mit den schon genannten Nachteilen. Außerdem sind die empfindlichen Oberflächenwellenbaulemente direkt einer mechanischen Verspannung ausgesetzt, was zu Veränderungen der Bauelemente über einen längeren Zeitraum führen kann.

In dem Artikel "Radio Accessible SAW Resonator for Non-contact Measurement of Torque and Temperature" IEEE Ultrasonics Proceedings 1996, pp 359-362 ist ein Prinzip beschrieben, nach dem mit Hilfe von reflektierenden Oberflächenwellenbauelementen die Torsion von Wellen bestimmt werden kann. Dabei erfolgt die Übertragung des Sensorsignals über einen Funkkanal und das Oberflächenwellenbauelement arbeitet in bekannter Weise passiv ohne eigene Energiequelle. Das reflektierende Oberflächenwellenbauelement ist mit der rotierenden Welle starr verbunden und allen mechanischen Belastungen ausgesetzt. Ein weiterer Nachteil dieser Anordnung besteht darin, dass die Amplitude des zurückgesendeten Signals als Sensorsignal genutzt wird, was zu einer relativ geringen Empfindlichkeit führt.

Der Erfindung liegt die Aufgabe zugrunde, eine Drehmoment-Messeinrichtung mit einem geeigneten Sensor und einem Betriebsverfahren anzugeben, welche die bekannten Nachteile beschriebener Lösungen beseitigen. Die Aufgabe wird gelöst durch die Drehmoment-Messeinrichtung den Sensor und das Betriebsverfahren, wie sie in den unabhängigen Patentansprüchen definiert sind.

Der erfindungsgemässe Sensor zur Messung eines an einer Welle angreifenden Drehmomentes enthält einen elektrischen Schwingkreis mit mindestens einer Resonanzfrequenz. Der Schwingkreis beinhaltet eine Anpassschaltung mit einem Wandler, ein Oberflächenwellenbauelement und eine Antenne. Der Wandler beinhaltet einen Kondensator mit einer ersten und einer zweiten Elektrode. Die erste Elektrode ist an einer ersten Befestigungsstelle mit der Welle verbunden und die zweite Elektrode an einer zweiten Befestigungsstelle, welche von der ersten Befestigungsstelle axial beabstandet ist, mit der Welle verbunden. Die beiden Elektroden sind relativ zueinander verschiebbar, so dass eine Verwindung der Welle durch das Drehmoment eine Änderung der Resonanzfrequenz des Schwingkreises bewirkt.

Die erfindungsgemässe drahtlose Drehmoment-Messeinrichtung zur Messung eines an einer Welle angreifenden Drehmomentes enthält einen erfindungsgemässen Sensor der oben beschriebenen Art und eine elektronische Abfrageeinrichtung zur Abfrage der Resonanzfrequenz der Sensor-Resonanzfrequenz mittels elektromagnetischer Wellen.

Beim erfindungsgemässen Verfahren zum Betreiben einer Drehmoment-Messeinrichtung wird ein hochfrequentes Abfragesignal von der Abfrageeinheit drahtlos zum Sensor übertragen. Dadurch wird der Schwingkreis des Sensors zu einer hochfrequenten Schwingung angeregt. Diese Schwingung wird als Antwortsignal drahtlos zur Abfrageeinheit übertragen. Das Antwortsignal wird aufbereitet und verarbeitet und als Ausgangssignal ausgegeben.

Der erfindungsgemässe Sensor beinhaltet vorzugsweise eine oder mehrere Hülsen oder Teile davon, die auf der Welle so befestigt ist sind, dass die durch ein Drehmoment verursachte Torsion der Welle auf den Kondensator übertragen wird. Dabei ist die eine Kondensatorplatte mit der Welle verbunden und die andere mit der Hülse. Eine von beiden ist elektrisch isoliert befestigt. Der Kondensator kann dabei so angeordnet sein, dass er entweder parallel zur Oberfläche der Welle liegt, senkrecht zur Achse aufgebaut ist oder durch die Drehung eine Abstandsänderung zweier oder mehrerer Kondensatorplatten bewirkt. Durch eine Abdichtung an den Stirnseiten der Hülse(n) wird der Kondensator gegen unerwünschte Umwelteinflüsse geschützt. Der Zwischenraum zwischen Hülse(n) und Welle ist wahlweise mit Gas oder einer entsprechenden Flüssigkeit gefüllt. Die Kondensatorplatten sind so gestaltet, dass sie im Fall der Kapazitätsänderung durch Flächenvariation leicht aufeinander gleiten und keine mechanischen Spannungen verursachen. Im Fall der Kapazitätsveränderung durch Abstandsvariation sind vorzugsweise Platten mit einem dazwischenliegenden Dielektrikum zu verwenden um Kurzschlüsse bei Vibrationen zu vermeiden. Dazu können beispielsweise Substrate mit einseitig metallisch bedampften Flächen eingesetzt werden. Der Kondensator ist elektrisch so mit einem oder mehreren Oberflächenwellenbauelementen verbunden, dass er einen Teil der Anpassschaltung darstellt und bei seiner Veränderung infolge eines angreifenden Drehmomentes die Resonanzfrequenz(en) des Schwingkreises definiert verändert werden. Die Anordnung enthält weiterhin eine Antenne, die in geeigneter Weise in die Hülse(n) integriert ist, sowie als Elemente der Anpassschaltung Induktivitäten und/oder elektrische Widerstände.

Der Sensor enthält keine elektrischen Energiequellen wie Batterien oder Akkumulatoren und keine Halbleiter. Er arbeitet rein passiv. Daraus ergeben sich miniaturisierte Ausführungen und zusätzlich der Vorteil von Hochtemperaturanwendungen.

Das elektrische Sensorsignal, das als Frequenzveränderung der Schaltung mit dem oder den Oberflächenwellenbauelement(en) vorliegt, wird in an sich bekannter Weise drahtlos per Funk an eine elektronische Abfrageeinheit übergeben. Dabei kann das Abfragesignal ein Puls, Burst oder Chirp sowie ein phasencodiertes Signal sein.

Besonders vorteilhaft ist dabei, dass die Torsion einer Welle auf den Wandler übertragen wird, ohne dass der Sensor selbst einer mechanischen Spannung ausgesetzt wird. Der Sensor wird getrennt von der Übertragungsstrecke für das Sensorsignal an den jeweiligen Verwendungszweck optimal angepasst.

Vorteilhaft ist ferner, dass das Sensorsignal als Frequenzverschiebung gewonnen wird, was eine grosse Empfindlichkeit und Genauigkeit der Messung zur Folge hat.

Ein weiterer Vorteil besteht darin, dass die Übertragung des Antwortsignals drahtlos per Funk erfolgt und dadurch die bekannten Nachteile von Schleifringen und Schleifbürsten vermieden werden. Die Übertragung der Signale ist hierdurch auch über grössere Entfernungen möglich.

Von Vorteil ist ausserdem, dass durch die Länge der Hülse(n) der Messbereich für die Bestimmung von Drehmomenten eingestellt werden kann. Dadurch kann die Sensorkonstruktion an die jeweiligen Erfordernisse optimal angepasst werden.

Ein grosser Vorteil besteht darin, dass das Sensorelement mit zwei Halbschalen ausgeführt werden kann und dadurch nachträglich an bestehende Antriebssysteme angebracht werden kann.

Vorteilhafte Ausgestaltungen sind in den Unteransprüchen angegeben.

Die Erfindung wird im Folgenden an einem Ausführungsbeispiel näher erläutert. In den zugehörigen Zeichnungen zeigen:
- Figur 1: in schematischer Darstellung eine erfindungsgemässe Drehmoment-Messeinrichtung,
- Figur 2: ein elektrisches Ersatzschaltbild eines erfindungsgemäsen Sensors
- Figur 3: den Signalverlauf eines Doppelresonators, und zwar a) die reflektierte Intensität als Funktion der Frequenz, und b) die Frequenzdifferenz der zwei Resonanzen als Funktion der erzeugten Kapazität bzw. des angelegten Drehmomentes,
- Figur 4: eine Ausführungsform des erfindungsgemässen Sensors mit Elektroden parallel zu Wellenoberfläche, und zwar a) im Längsschnitt und b) im Querschnitt,
- Figur 5: eine Ausführungsform des erfindungsgemässen Sensors unter Nutzung eines Hülsenteiles, und zwar a) im Längsschnitt und b) im Querschnitt,
- Figur 6: eine Ausführungsform des erfindungsgemässen Sensors mit Elektroden senkrecht zur Wellenachse, und zwar a) im Längsschnitt und b) im Querschnitt,
- Figur 7: eine weitere Ausführungsform des erfindungsgemässen Sensors, und zwar a) im Längsschnitt und b) im Querschnitt,
- Figur 8: Lagen der Elektroden des Sensors von Figur 7 im Querschnitt, und zwar a) ohne angelegtes Drehmoment bzw. b) mit angelegtem Drehmoment,
- Figur 9: eine kompaktere Ausführungsform des erfindungsgemässen Sensors mit Elektroden senkrecht zur Wellenachse, und zwar a) im Längsschnitt und b) im Querschnitt und
- Figur 10: eine Ausführungsform des erfindungsgemässen Sensors, in welcher die Kapazität als kompaktes Modul für Hochfrequnzanwendung ausgeführt ist.

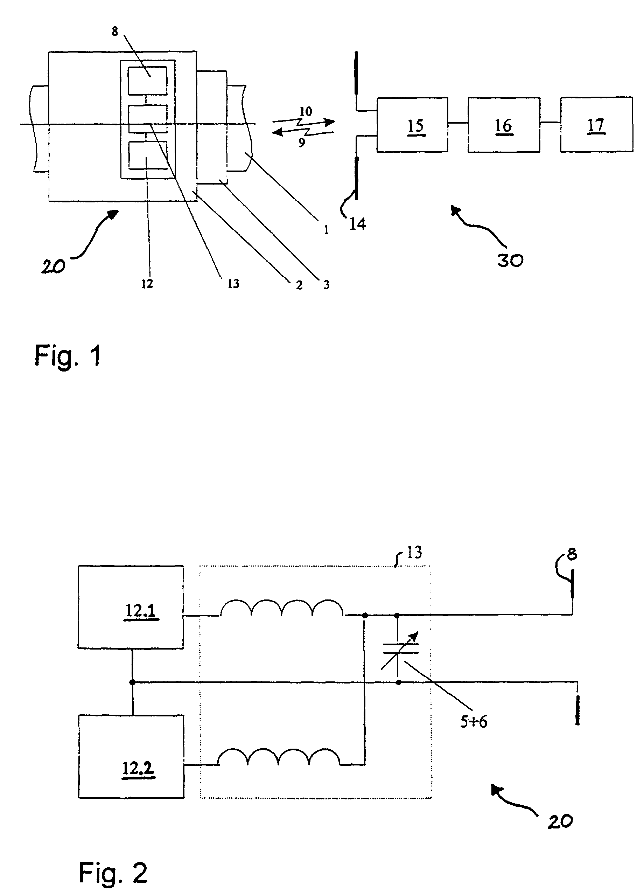

Die in **Figur 1** dargestellte erfindungsgemässe Drehmoment-Messeinrichtung beinhaltet einen Sensor 20 und eine Abfrageeinheit 30. Bei der dargestellten, beispielhaften Ausführungsform des Sensors 20 wird auf einer Welle 1 eine Hülse 2 mit Hilfe einer Befestigungsschelle 3 einseitig fest aufgespannt. Die Hülse 2 ist auf der anderen Seite durch eine elastische Dichtung 7 derart gegen die Welle 1 abgeschlossen, dass sie einerseits den Raum zwischen Hülse 2 und Welle 1 gegen unerwünschte Einflüsse von außen abdichtet und einen möglicherweise eingebrachten Füllstoff zwischen Hülse 2 und Welle 1 zuverlässig zurückhält und andererseits eine Torsion der Welle 1 nicht auf die Hülse 2 überträgt. Wenn sich also die Welle 1 unter der Einwirkung eines Drehmomentes verwindet, verschieben sich die äussere Oberfläche der Welle 1 und die innere Oberfläche der Hülse 2 gegeneinander. Die Verschiebung führt zur Veränderung der Stellung zweier Kondensatorplatten 5 und 6 zueinander und damit zur Veränderung einer Kapazität, die ihrerseits Bestandteil einer elektronischen Anpassschaltung 13 ist. Durch die Veränderung des Kapazitätswertes des Kondensators verändert ein Schwingkreis, bestehend aus Anpassschaltung 13, Antenne 8 und Oberflächenwellenbauelement 12, seine Resonanzfrequenz. Damit ist die Veränderung der Resonanzfrequenz ein Maß für das an die Welle 1 angreifende Drehmoment.

Von einer Abfrageeinheit 30 wird ein hochfrequentes Abfragesignal 9 über eine Antenne 14 zur Antenne 8 am Drehmomentsensor übertragen. Dieses regt das Oberflächenwellenbauelement 12 mit der Anpassschaltung 13 zu einer hochfrequenten Schwingung an, die als Antwortsignal 10 über die Antennen 8 und 14 zur Abfrageeinheit 30 zurückgesendet wird. Dieses Antwortsignal 10 wird in einer Sende- und Empfangsschaltung 15 zunächst vorverstärkt und einer Signalverarbeitungsstufe 16 zugeführt. Nach einer Aufbereitung und rechnerischen Verarbeitung in der Signalverarbeitungsstufe 16 wird das Ergebnis in einer Anzeigeeinheit 17 zu Anzeige gebracht oder einem (nicht dargestellten) Regelkreis zugeführt.

In der **Figur 2** ist ein elektrisches Ersatzschaltbild des Schwingkreises Antenne-Anpassschaltung-Oberflächenwellenbauelement 8, 13, 12 eines erfindungsgemässen Sensors 20 dargestellt. In diesem Fall ist eine Doppelresonatoranordnung als doppeltes Oberflächenwellenbauelement 12.1, 12.2 eingesetzt. Hierdurch können Einflüsse wie Drift und Veränderungen infolge Temperaturänderungen kompensiert werden. Beide Oberflächenbauelemente 12.1, 12.2 sind mit dem Anpassnetzwerk 13 verbunden, das aus zwei Induktivitäten und dem Messkondensator 5, 6 besteht. Weiterhin gehört die Antenne 8 am Drehmomentsensor noch zur elektrischen Schaltung. Das Abfragesignal 9 regt den Schwingkreis zu hochfrequenten Schwingungen an, die über die Antenne 8 an die Abfrageeinheit zurückgesendet werden, wo die Resonanzfrequenz ermittelt wird. Die Resonanzfrequenzen der beiden Resonatoren 12.1, 12.2 des Doppelresonators liegen in einem geeigneten Abstand, so dass sich die Differenzfrequenz leicht detektieren lässt. Im Falle der Verwendung von Doppelresonatoren stellt die Differenzfrequenz das gesuchte Ausgangssignal dar. Durch die erwähnte Veränderung des Messkondensators 5, 6 infolge der Einwirkung eines Drehmoments verändert sich die Differenzfrequenz.

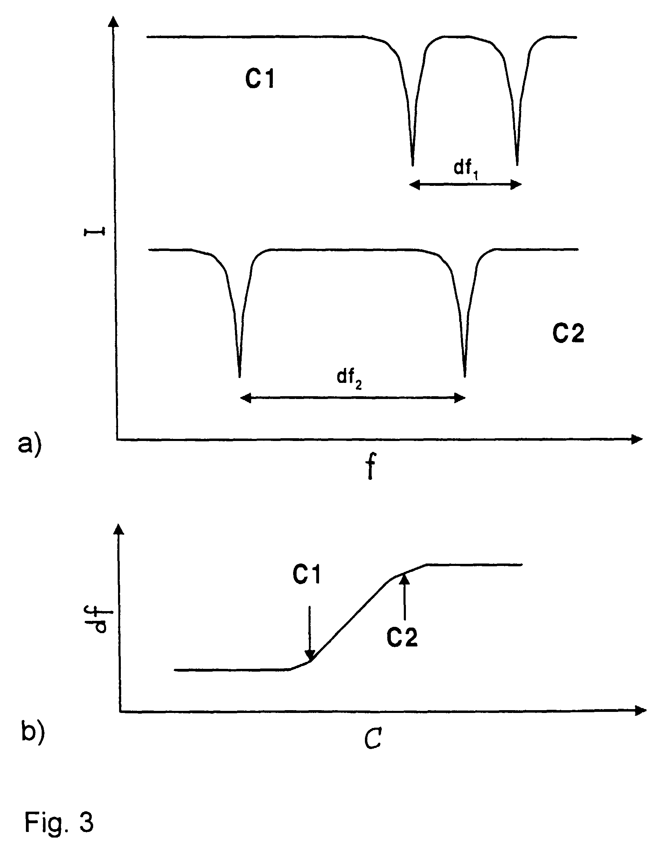

**Figur 3** zeigt einen typischen Signalverlauf der reflektierten Leistung einer Doppelresonatorausführung. Die Doppelresonatorausführung hat den Vorteil, dass Umwelteinflüsse wie die Temperatur oder der Funkkanal kompensiert werden können. Das Nutzsignal ergibt sich aus der Differenz der gemessenen Resonanzfrequenzen. **Figur 3a)** zeigt die Position der Resonanzlinien bei einer kleinen und einer grossen Parallelkapazität, welches einem kleinen bzw. einem grossen Drehmoment entspricht. Aufgetragen ist die reflektierte Intensität I gegenüber der Frequenz f.

**Figur 3b)** zeigt die Frequenzdifferenz df der beiden Resonanzen in Abhängigkeit der durch Verdrehung erzeugten Kapazität C bzw. des angelegten Drehmomentes. Je grösser das angelegte Drehmoment und damit die wirksame Kapazität der verwendeten Ausführungsform ist, desto grösser ist die Frequenzdifferenz für unterschiedlich angepasste Resonatoren. Das Signal kann direkt gemessen werden, oder es kann auch über einen Funkkanal abgefragt werden.

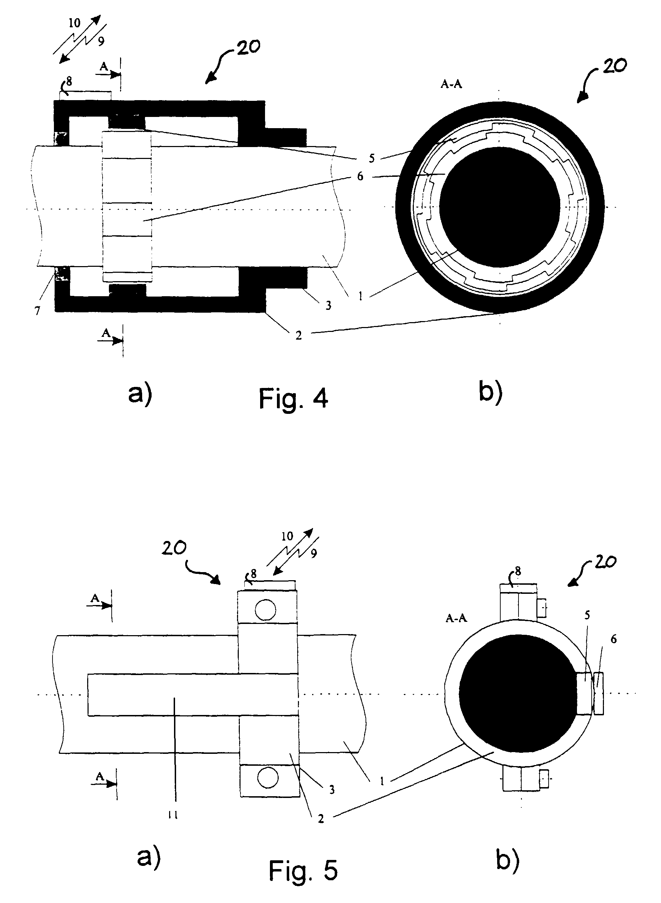

**Figur 4** zeigt einen Längsschnitt (Fig. 4a)) und einen Querschnitt (Fig. 4b)) durch einen erfindungsgemässen Sensor 20 mit Kondensatorflächen parallel zur Wellenoberfläche. Der Messkondensator wird durch eine geeignete Flüssigkeit 4 geschützt. Der Kondensator selbst besteht aus der an der Hülse befestigten Platte 5 und mit der Welle fest verbundene Platte 6 und liegt parallel zur Wellenoberfläche. Beim Angreifen eines Drehmomentes verändert sich durch Torsion die Überlappung der beiden Platten, was zu einer Veränderung der Kapazität des Kondensators führt. Die Hülse 2 ist an der nicht eingespannten Seite durch eine elastische Dichtung 7 gegen Auslaufen der Flüssigkeit 4 und gegen das Eindringen von Schmutz geschützt. Der Kondensator ist elektrisch mit dem Anpassnetzwerk und der Antenne 8 verbunden. Die Auskopplung des Sensorsignals erfolgt Über das Abfragesignal 9 und das von der Antenne zurückgestrahlte Antwortsignal 10.

**Figur 5** zeigt eine Ausführungsform des erfindungsgemässen Sensors 20 unter Benutzung einer Teilhülse 11, die auf der Welle 1 befestigt ist. Über eine Spannvorrichtung 3, eine Schelle oder auf eine andere geeignete Weise ist ein Arm als Teilhülse 11 auf der Welle 1 befestigt. Bei Torsion der Welle bleibt die Teilhülse unbeeinflusst und sorgt so für eine Verschiebung der Kondensatorplatten 5 und 6, die auf der Welle 1 und der Teilhülse 11 befestigt sind. Diese Verschiebung führt wieder zur Veränderung der Kapazität des Kondensators und so zur Veränderung der Resonanzfrequenz des Schwingkreises.

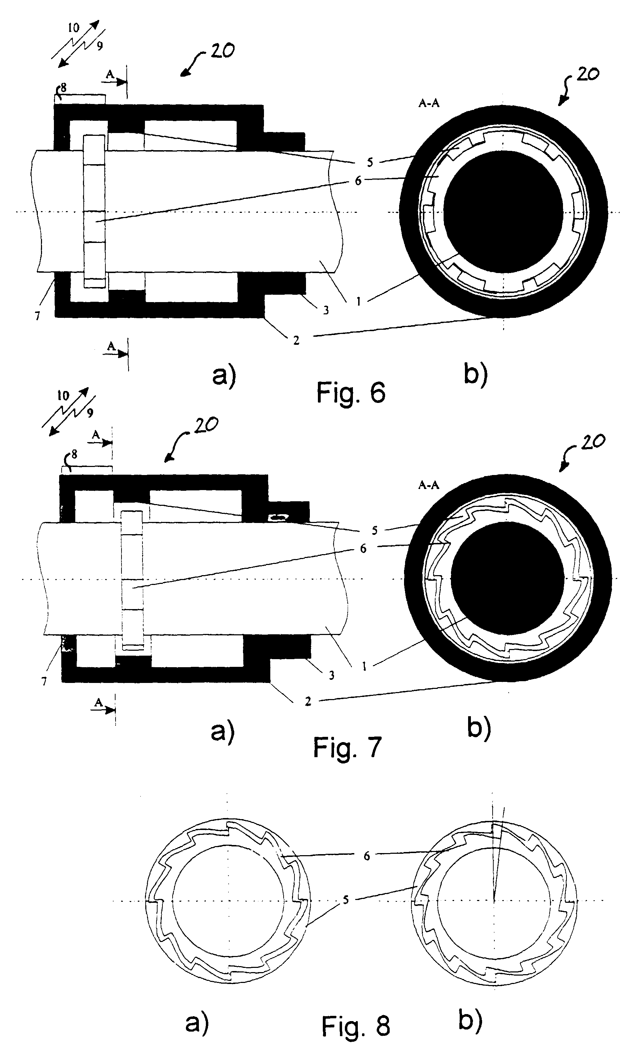

In **Figur 6** ist eine Ausführungsform des erfindungsgemässen Sensors 20 dargestellt, bei der die Kondensatorplatten 5 und 6 senkrecht zur Drehachse der Welle 1 angeordnet sind. Bei Torsion der Welle 1 wird die Fläche des Messkondensators in ähnlicher Weise verändert wie bei einer Anordnung der Kondensatorflächen parallel zur Oberfläche der Welle 1.

**Figuren 7 und 8** zeigen eine Ausführungsform des erfindungsgemässen Sensors 20, bei der durch die Torsion einer Welle der Plattenabstand des Messkondensators verändert wird. Die Kondensatorflächen 5 und 6 sind schräggestellt in dem Sinn, dass sie im wesentlichen eben und bezüglich der Welle nicht tangential angeordent sind. Sie entfernen sich voneinander (siehe Figur 8a)) oder nähern sich einander an (siehe Figur 8b)), je nachdem, in welcher Richtung sich die Welle 1 verwindet. Diese Ausführungsform reagiert besonders empfindlich auf eine Torsion der Welle.

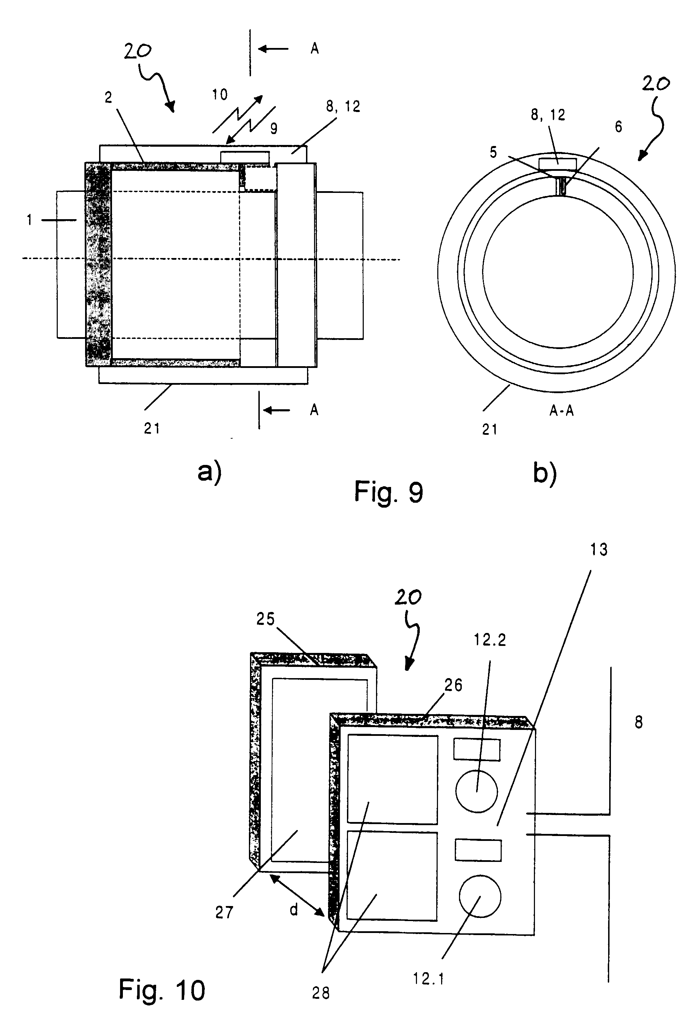

**Figur 9** zeigt eine Ausführungsform des erfindungsgemässen Sensors 20, welche vor allem für kleine Verdrehungswinkel geeignet ist, weil die Distanz zwischen zwei im wesentlichen radial angeordneten Elektroden 5 und 6 variiert wird. Eine erste Elektrode 5 ist mit der Welle 1 direkt verbunden, währendem eine zweite Elektrode 6 über die Hülse 2 mit der Welle 1 verbunden ist. Ein angelegtes Drehmoment führt zu einer Distanzänderung der beiden Elektroden 5, 6. Eine äusserst kompakte Version, vor allem für Hochfrequenzanwendungen, besteht darin nur ein Plattenpaar 5, 6 zu verwenden, welches direkt durch kurze Leitungen mit den Resonatoren 12 und der Antenne 8 verbunden werden kann. Die Benutzung nur eines Elektrodenpaares 5, 6 hat zudem den Vorteil, dass die Ausführung mechanisch präziser und kostengünstiger gefertigt werden kann. Es können aber auch mehrere Kapazitäten verwendet werden, die parallel geschaltet und über den ganzen Umfang verteilt werden.

**Figur 10** zeigt eine modulare und kompakte Bauweise eines erfindungsgemässen Sensors 20 mit einer auf Distanzänderung reagierenden Kapazität, welche vor allem für kleine Verdrehungswinkel geeignet ist. Die Kapazität umfasst zwei dielektrische Substrate 25 und 26, welche einseitig metallisiert sind. Um Kurzschlüsse zu verhindern sind sie so angeordnet, dass immer eine isolierende Schicht zwischen den Elektroden ist. Damit die Elektrodenpaare auf der gleichen Seite abgegriffen werden können, ist die Gegenelektrode 25 elektrisch isoliert angebracht. Die Verbindungen zu den Resonatoren 12.1, 12.2 und der Antenne 8 sind kurz, um Abstrahlungseffekte zu verhindern. Zusätzlich können alle Elemente der Resonatoren 12.1, 12.2 und der Anpassschaltung 13 auf dem Print 26 integriert werden.

## Patentansprüche

1. Sensor (20) zur Messung eines an einer Welle (1) angreifenden Drehmomentes, enthaltend einen elektrischen Schwingkreis mit mindestens einer Resonanzfrequenz, welcher Schwingkreis eine Anpassschaltung (13) mit einem Wandler, ein Oberflächenwellenbauelement (12) und eine Antenne (8) beinhaltet, **dadurch gekennzeichnet**, dass der Wandler einen Kondensator (5,6) mit einer ersten Elektrode (5) und einer zweiten Elektrode (6) beinhaltet, wobei die erste Elektrode (5) an einer ersten Befestigungsstelle mit der Welle (1) verbunden ist und die zweite Elektrode (6) an einer zweiten Befestigungsstelle, welche von der ersten Befestigungsstelle axial beabstandet ist, mit der Welle (1) verbunden ist und die beiden Elektroden (5,6) relativ zueinander verschiebbar sind, so dass eine Verwindung der Welle (1) durch das Drehmoment eine Änderung der Resonanzfrequenz des Schwingkreises bewirkt.

2. Sensor (20) nach Anspruch 1, **dadurch gekennzeichnet**, dass die Elektroden (5, 6) im wesentlichen parallel zur Oberfläche der Welle (1) oder im wesentlichen senkrecht zur Achse der Welle (1) angeordnet sind.

3. Sensor (20) nach Anspruch 1 oder 2, **dadurch gekennzeichnet**, dass der Kondensator (5,6) im wesentlichen durch zwei einseitig metallisierten Dielektrika (25, 26), realisiert ist.

4. Sensor (20) nach einem der Ansprüche 1-3, **dadurch gekennzeichnet**, dass der Kondensator (5, 6) ineinander verzahnte und/oder im wesentlichen ebene, bezüglich der Welle (1) nicht tangential angeordente Elektroden (5, 6) aufweist.

5. Sensor (20) nach einem der Ansprüche 1-4, **dadurch gekennzeichnet**, dass er mehrere Oberflächenwellenbauelemente (12.1, 12.2) oder Doppelanordnungen von Oberflächenwellenbauelementen enthält.

6. Sensor (20) nach Anspruch 5, **dadurch gekennzeichnet**, dass er zwei parallel geschaltete Oberflächenbauelemente enthält, wobei zur Kompensation unerwünschter Einflüsse nur ein Oberflächenbauelement an den Kondensator (5, 6) angeschlossen ist.

7. Sensor (20) nach einem der Ansprüche 1-6, **dadurch gekennzeichnet**, dass eine Elektrode (6) starr mit der Welle (1) verbunden ist.

8. Sensor (20) nach einem der Ansprüche 1-7, **dadurch gekennzeichnet**, dass mindestens eine Hülse (2) bzw. Teilhülse (11) an einer Befestigungsstelle einseitig fest mit der Welle (1) verbunden ist und eine Elektrode (5) in einem festgelegten axialen Abstand von der Befestigungsstelle an der Hülse (2) bzw. Teilhülse (11) angebracht ist.

9. Sensor (20) nach Anspruch 8, **dadurch gekennzeichnet**, dass seine Empfindlichkeit durch Veränderung des Abstandes zwischen der Befestigungsstelle der Hülse (2) bzw. Teilhülse (11) und dem Kondensator (5, 6) einstellbar ist.

10. Sensor (20) nach Anspruch 8 oder 9, **dadurch gekennzeichnet**, dass die Hülse (2) bzw. Teilhülse (11) gleichzeitig die Antenne (8) darstellt.

11. Sensor (20) nach einem der Ansprüche 1-10, **dadurch gekennzeichnet**, dass eine Messwelle in die ursprüngliche Welle (1) eingesetzt und vorzugsweise mit Flanschen an dieser Welle (1) befestigt ist.

12. Drahtlose Drehmoment-Messeinrichtung zur Messung eines an einer Welle (1) angreifenden Drehmomentes, enthaltend einen Sensor (20) nach einem der Ansprüche 1-11 und eine elektronische Abfrageeinrichtung (30) zur Abfrage der Sensor-Resonanzfrequenz mittels elektromagnetischer Wellen (9, 10).

13. Drehmoment-Messeinrichtung nach Anspruch 12, **dadurch gekennzeichnet**, dass die Abfrageeinrichtung (30) eine Sende- und Empfangsschaltung (15) und eine Signalverarbeitungsstufe (16) enthält.

14. Drehmoment-Messeinrichtung nach Anspruch 12 oder 13, **dadurch gekennzeichnet**, dass sie mehrere Sensoren mit verschiedenen Resonanzfrequenzen bzw. Laufzeiten enthält, so dass eine eindeutige Identifikation der Sensoren an mehreren Achsen mit einem Abfragegerät (30) möglich ist.

15. Verfahren zum Betreiben einer Drehmoment-Messeinrichtung nach einem der Ansprüche 12-14, **dadurch gekennzeichnet**, dass ein hochfrequentes Abfragesignal (9) von der Abfrageeinheit (30) drahtlos zum Sensor (20) übertragen wird, den Schwingkreis des Sensors (20) zu einer hochfrequenten Schwingung anregt, diese Schwingung als Antwortsignal (10) drahtlos zur Abfrageeinheit übertragen, das Antwortsignal (10) aufbereitet sowie verarbeitet und als Ausgangssignal ausgegeben wird.

16. Verfahren nach Anspruch 15, **dadurch gekennzeichnet**, dass das Abfragesignal (9) ein Chirpsignal, ein phasencodiertes Signal, ein Burst oder ein schrittweise erhöhtes Sinus-Signal ist.

17. Verfahren nach Anspruch 15 oder 16, **dadurch gekennzeichnet**, dass das Ausgangssignal einer Anzeigeeinheit und/oder einem Regelkreis zugeführt wird.
